# EUROPÄISCHE PATENTSCHRIFT

(11) **EP 1 295 756 B1**
(45) Veröffentlichungstag und Bekanntmachung des Hinweises auf die Patenterteilung: **31.03.2004**
(21) Anmeldenummer: 02027909.7
(22) Anmeldetag: 17.08.1999
(51) Int. Cl.: B60R 7/04

(54) **Staubox**
Storage compartment
Réceptacle de rangement

(30) Priorität: 21.08.1998 DE 19838031
(43) Veröffentlichungstag der Anmeldung: 26.03.2003
(62) Teilanmeldung aus: 99116074.8
(73) Patentinhaber: Audi AG, 85045 Ingolstadt (DE)
(72) Erfinder: Zeidler, Siegfried, 74906 Bad Rappenau (DE); Schmid, Rainer, 74177 Bad Friedrichshall (DE); Fromm, Peter, 74243 Langenbrettach (DE)
(74) Vertreter: Engelhardt, Harald

(56) Entgegenhaltungen:
- EP-A- 0 491 113
- US-A- 5 647 652

## Beschreibung

Die Erfindung betrifft eine Staubox gemäß dem Oberbegriff des Patentanspruchs 1.

Bevorzugt bilden derartige Stauboxen einen integralen Bestandteil einer Mittelarmlehne, die zwischen den beiden Vordersitzen eines Kraftfahrzeuges angeordnet ist. Der Deckel der Staubox ist häufig mit einer Polsterung versehen und als Armauflage ausgeführt. Ein durch diesen Deckel verschließbarer Grundkörper bildet ein Behältnis zur Aufnahme verschiedener Utensilien. Weit verbreitet ist die Unterbringung von Mobiltelefonen in derartig ausgeführten Mittelarmlehnen.

Eine Staubox der vorbezeichneten Art ist durch die EP-A-0 491 113 bekannt geworden. Beim Gegenstand dieser Druckschrift ist der Deckel an seiner vorderen und seiner hinteren Schmalseite an dem wannenartigen Grundkörper angelenkt.

Die beiden (horizontalen) Schwenkachsen lassen sich durch je eine Drucktaste gegen Federwiderstand lösen, so dass der Deckel entweder um die vordere oder um die rückwärtige Schwenkachse hochgeklappt werden kann. Der wannenartige Grundkörper dagegen ist nicht schwenkbar, sondern fahrzeugfest angeordnet.

Der Erfindung liegt die Aufgabe zugrunde, eine gattungsgemäße Staubox so weiterzubilden, dass die Betätigung oder Entnahme von Utensilien, die in der Staubox, insbesondere in deren Deckel, untergebracht sind, hinsichtlich des Bedienkomforts optimiert wird.

Gemäß der Erfindung wird die Aufgabe bei einer Staubox der eingangs bezeichneten Art durch die kennzeichnenden Merkmale des Patentanspruchs 1 gelöst.

Die Vorteile der Erfindung kommen besonders dann zur Geltung, wenn bei einer zwischen den Vordersitzen eines Fahrzeugs - z.B. als Mittelarmlehne - angeordneten Staubox die Innenseite des Deckels als Behältnis für ein Utensil, z.B. ein Mobiltelefon, vorbereitet ist. Wird nämlich der wannenartige Grundkörper (Mittelarmlehne) aus der (horizontalen) Normallage heraus in eine Vertikallage und zugleich der Deckel - um die rückwärtige Schwenkachse - zu den Fondpassagieren hin verschwenkt, so ergibt sich eine für Fondpassagiere günstige Entnahmeposition für das im Deckel befindliche - z.B. nach Art eines Handys ausgebildete - Mobiltelefon. Im Vergleich zu der bekannten Staubox nach EP-A-0 491 113 ergibt sich durch die erfindungsgemäße Lösung nicht nur eine Verbesserung der Ergonomie für den Fahrer, sondern auch für alle Mitfahrer. Die Erfindung ist nicht nur an schwenkbaren Armlehnen realisierbar; sie kann vielmehr beispielsweise auch an Stauboxen verwirklicht werden, die zwischen Fahrzeugsitzen auf Schienenführungen bewegbar sind, wie sie beispielsweise in der DE 197 42 408 A1 beschrieben sind.

Vorteilhafte Ausgestaltungen der Erfindung enthalten die Patentansprüche 2 - 4.

Die erfindungsgemäßen Verstelleinrichtungen zur Aktivierung bzw. Deaktivierung einzelner Schwenklagerungen können wahlweise an rotatorisch oder translatorisch versteilbaren Stauboxen vorgesehen werden. Wichtig in diesem Zusammenhang ist, dass durch die Erfindung die Nutzung einer ohnehin vorgenommenen Gesamtverstellung der Staubox ermöglicht wird, und zwar dahingehend, dass es gelingt, den Wechsel von einer Schwenkbewegung des Deckels zur anderen ohne zusätzliche Bediengriffe des Fahrers bzw. der Mitfahrer durchzuführen.

Hervorzuheben ist weiter, dass durch die erfindungsgemäße Lösung für den bevorzugten Anwendungsfall auf schwenkbare Mittelarmlehnen rein äußerlich keine Unterschiede zu bislang gebräuchlichen Mittelarmlehnen auftreten. Demnach sind also durch den Einsatz der Erfindung optische oder designtechnische Beeinträchtigungen nicht gegeben. Außerdem können praxiserprobte Konzepte zur Arretierung der Armlehne in verschiedenen Gebrauchsstellungen übernommen werden.

In der Zeichnung sind vorteilhafte Ausführungsbeispiele dargestellt, die im Folgenden detailliert beschrieben werden. Es zeigt:
- Fig. 1: eine als Mittelarmlehne ausgeführte Staubox in einer ersten Seitenansicht,
- Fig. 2: die Staubox gemäß Fig. 1 in einer anderen Seitenansicht,
- Fig. 3: eine Ansicht gemäß Schnitt III-III in Fig. 1,
- Fig. 4: für ein zweites Ausführungsbeispiel in perspektivischer Darstellung den Fahrgastraum-Bereich zwischen den beiden Vordersitzen eines Kraftfahrzeugs, mit Blickrichtung schräg von hinten, bei geschlossener Staubox,
- Fig. 5: in der Darstellung entsprechend Fig. 4 den betreffenden Fahrgastraum-Bereich mit in Fahrtrichtung aufgeklappter Staubox,
- Fig. 6: den vorgenannten Fahrgastraum-Bereich mit entgegen der Fahrtrichtung hochgeklappter Staubox, aber noch im Schließzustand befindlichem Deckel, und
- Fig. 7: für die vorgenannte Staubox einen entgegen der Fahrtrichtung hochgeklappten Grundkörper mit einem entgegen der Fahrtrichtung in Öffnungsstellung aufgeklappten Deckel.

Gleiche Bauteile weisen in alle Figuren die gleiche Bezifferung auf.

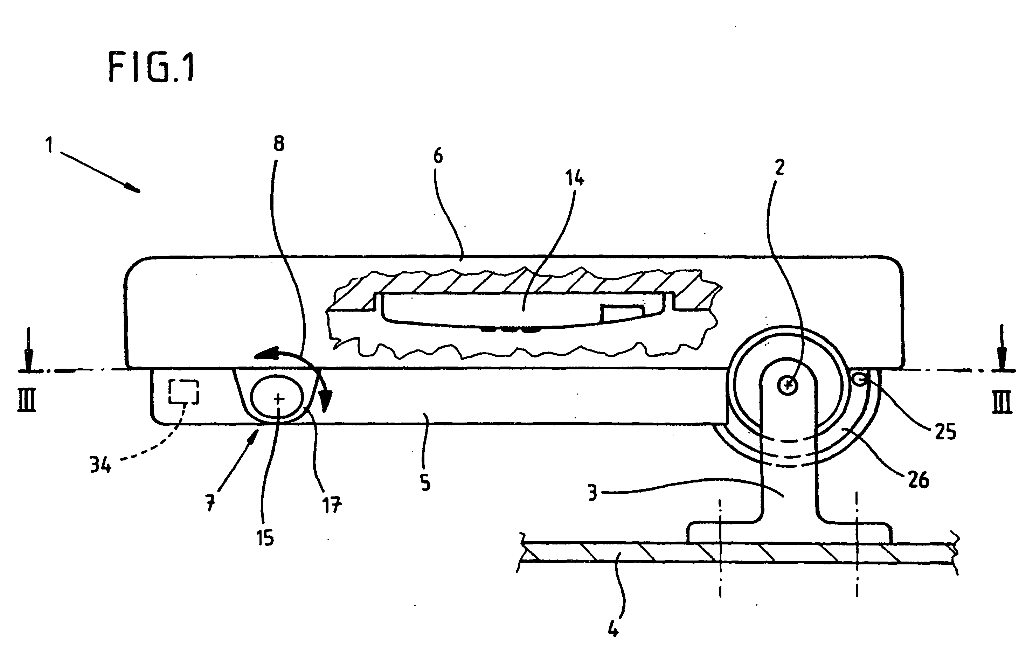

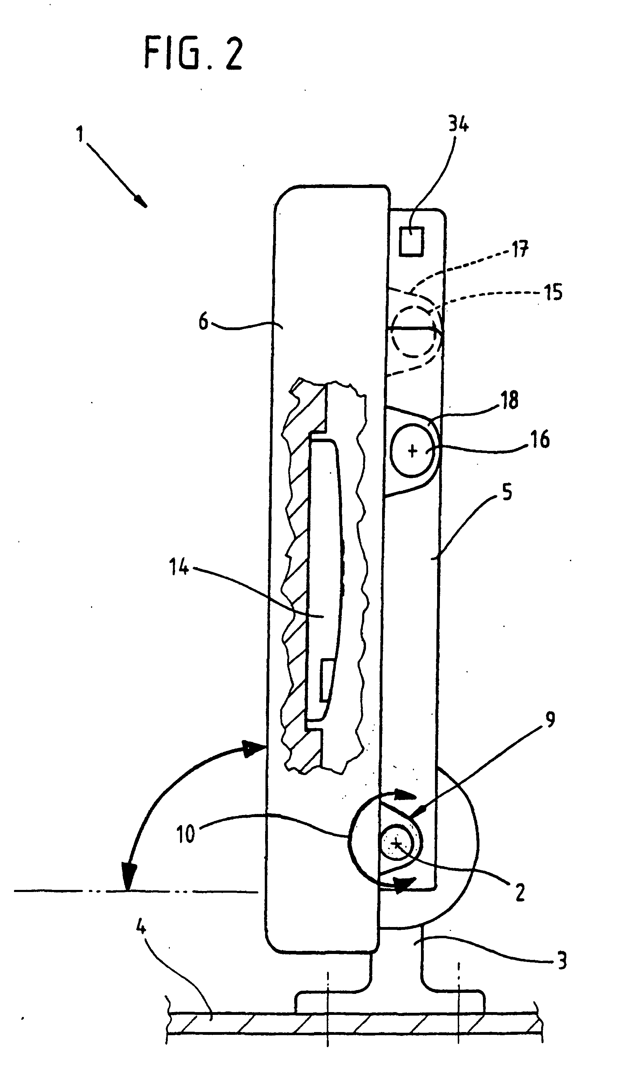

Man erkennt in Fig. 1 eine als Mittelarmlehne 1 ausgeführte Staubox, die mittels einer Basislagerung 2 an einem als Lagerkonsole wirksamen Lagerfuß 3 verschwenkbar gehalten ist. Letzterer ist hier an einem Verkleidungsteil 4, beispielsweise einer Mitteltunnelabdeckung, befestigt. Abweichend von der in Fig. 1 gezeigten Anordnung kann der Lagerfuß 3 aber auch einem Sitzgestell oder einem Fahrzeugseitenwandteil zugeordnet sein. Wesentliche Elemente der Mittelarmlehne 1 sind ein wannenartig ausgeführter Grundkörper 5 und ein als Armauflage dienender Deckel 6, der in später noch zu erläuternder Weise gegenüber dem wannenartigen Grundkörper 5 einerseits um eine Schwenklagerung 7 gemäß Doppelpfeil 8 und andererseits um eine Zusatzschwenklagerung 9 gemäß Doppelpfeil 10 (siehe Fig. 2) verschwenkbar ist.

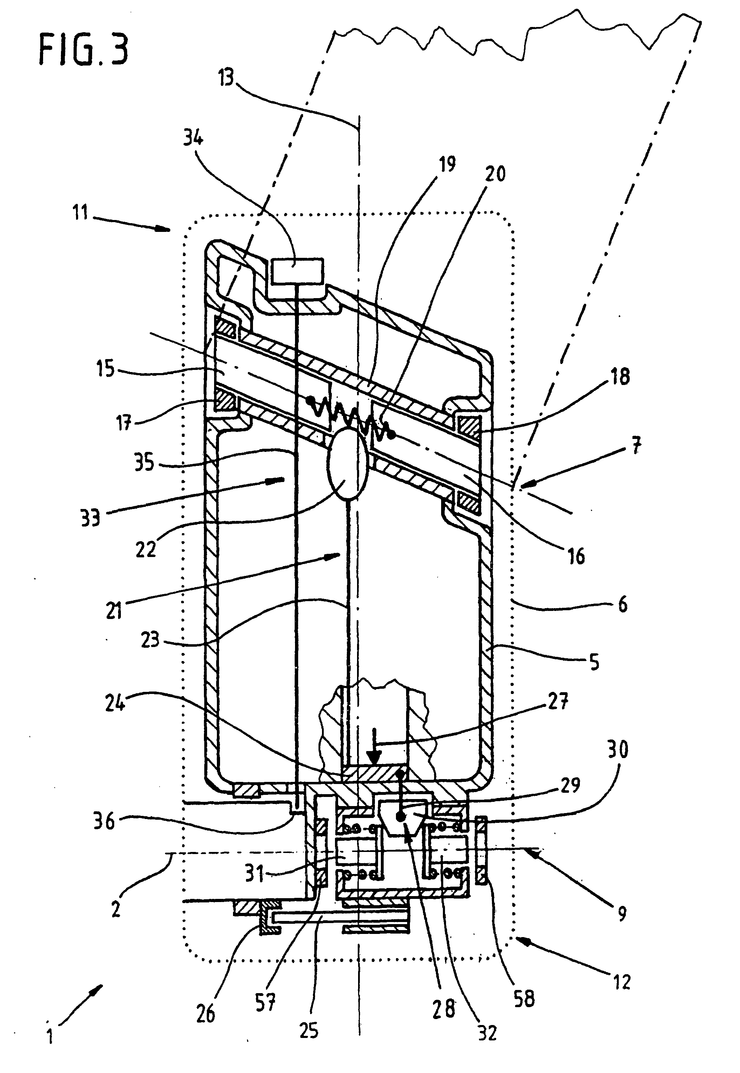

Fig. 3 zeigt Ausführungsbeispiele für die Schwenklagerung 7, die hier einem vorderen Endbereich 11 der Mittelarmlehne 1 zugeordnet ist, und die Zusatzschwenklagerung 9, die sich in einem hinteren Endbereich 12 der Mittelarmlehne 1 befindet. Für eine zwischen Vordersitzen eines Kraftfahrzeuges angeordnete Mittelarmlehne 1 bedeutet dies, dass der vordere Endbereich 11 bei der in Fig. 1 gezeigten Horizontalstellung von der Rückenlehne abgewandt ist und dementsprechend der gegenüberliegende Endbereich 12 der Rückenlehne zugewandt ist. Entsprechend der ersten Lösungsvariante ist die Schwenklagerung 7 gegenüber einer Längsachse 13 des wannenartigen Grundkörpers 5 schräg angestellt, so dass sich bei einem Aufklappen des Deckels 6 (in Fig. 3 punktiert angedeutete Schließstellung) für diesen die strichpunktiert dargestellte Gebrauchsposition ergibt.

In ergonomisch günstiger Weise wird damit beispielsweise für einen, bezogen auf die Ansicht in Fig. 3 linkssitzenden Fahrer, ein an dem Deckel 6 innenseitig gehaltenes Handy 14 in eine ergonomisch günstige Bereitschaftsposition gebracht. Die Schwenklagerung 7 wird hier realisiert durch dem wannenartigen Grundkörper 5 zugeordnete Gelenkzapfen 15, 16 einerseits und dem Deckel 6 zugeordnete Lagerohren 17, 18 andererseits. Innerhalb einer Schiebehülse 19 sind die Gelenkzapfen 15, 16 gleitbeweglich und hier mittels einer Zugfeder 20 gegeneinander verspannt. Für die Bewegung der Gelenkzapfen 15, 16 in die Lagerohren 17, 18 hinein (Aktivierung der Schwenklagerung) und auch wieder aus diesen heraus (Deaktivierung der Schwenklagerung) ist ein erster Verstellmechanismus 21 vorgesehen, dessen wesentliche Elemente hier ein Druckkörper 22, eine erste Übertragungsstange 23, ein Gleitschieber 24, ein daran gehaltener Stellbolzen 25 und eine mit Bezug auf den Lagerfuß 3 ortsfeste Führungskulisse 26 sind. Dieser Verstellmechanismus 21 ist hier nur skizzenhaft angedeutet und aus Gründen der Übersichtlichkeit nicht in seinen genauen Proportionen wiedergegeben. Die erste Verstelleinrichtung 21 stellt eine Bewegungskopplung zwischen den Gelenkzapfen 15,16 und der Verschwenkung der gesamten Mittelarmlehne 1 um die Basislagerung 2 dar. Wird beispielsweise die Mittelarmlehne 1 aus der in Fig. 1 gezeigten Horizontallage heraus in die Gebrauchslage gemäß Fig. 2 verschwenkt, sorgt der in der Führungskulisse 26 geführte Stellbolzen 25 für eine Abwärtsbewegung des Gleitschiebers 24 gemäß Pfeil 27. Durch diese Abwärtsbewegung wird der Druckkörper 22 von der ersten Übertragungsstange 23 ebenfalls abwärts bewegt und damit soweit aus der Schiebehülse 19 herausgezogen, dass die Zugfeder 20 die Gelenkzapfen 15, 16 aus der in Fig. 3 dargestellten Lagerungsstellung heraus in eine Lösestellung aufeinander zu bewegen kann. Die in Fig. 1 gezeigte erste Verbindung zwischen dem Deckel 6 und dem Grundkörper 5 über die Schwenklagerung 7 ist damit aufgehoben.

Gemäß einer besonders vorteilhaften Weiterbildung der Erfindung ist hier eine zweite der Zusatzschwenklagerung 9 zugeordnete Verstelleinrichtung 28 mit der ersten Verstelleinrichtung 21 wirkverbunden. So übt beispielsweise der Gleitschieber 24 über eine zweite Übertragungsstange 29 Betätigungskräfte auf einen Stellkörper 30 aus, durch den über hier nicht weiter bezifferte Druckfedern vorgespannte Gelenkzapfen 31, 32 aus der in der Zeichnung erkennbaren Lösestellung heraus in Lagerohren 57, 58 hineinbewegbar sind. Die Verstelleinrichtungen 21 und 28 sind demnach so aufeinander abgestimmt, dass eine Auflösung der ersten Schwenklagerung 7 mit dem Aufbau der Zusatzschwenklagerung 9 einhergeht. Bei der Abwärtsverschwenkung der Mittelarmlehne 1 aus der in Fig. 2 gezeigten Position heraus ergeben sich dann die umgekehrten Verhältnisse.

Es wird hier noch einmal ausdrücklich betont, dass die in Fig. 3 gezeigten Verhältnisse rein schematischer Natur sind. Vorstellbar ist auch eine vollständige Entkopplung der Verstelleinrichtungen 21 und 28. Anstelle der Übertragungsstangen 23 und 29 können auch Seilzüge vorgesehen sein. Ebenso können den Gelenkzapfen 15, 16 sowie 31, 32 Aktuatoren zugeordnet sein, die elektrisch oder auf Fluidbasis betätigt sind. Gleiches gilt im Übrigen für eine ebenfalls nur schematisch dargestellte Arretiereinrichtung 33, deren wesentliche Elemente hier eine Drucktaste 34, eine dritte Übertragungsstange 35 und ein dem Lagerfuß 3 zugeordnetes Rastprofil 36 sind. Derartige Arretiereinrichtungen zur Sicherung der Mittelarmlehne 1 in unterschiedlichen Winkellagen sind allgemein bekannt und werden hier deshalb nicht näher beschrieben.

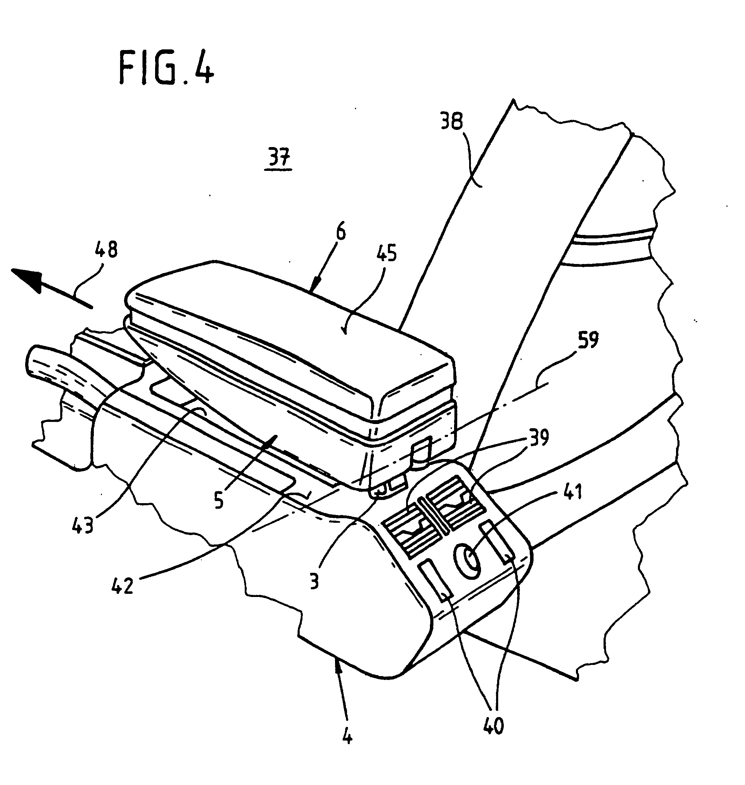

Anhand der Fig. 4 bis 7 wird nachfolgend die Funktion der erfindungsgemäßen Lösungsvarianten näher erläutert.

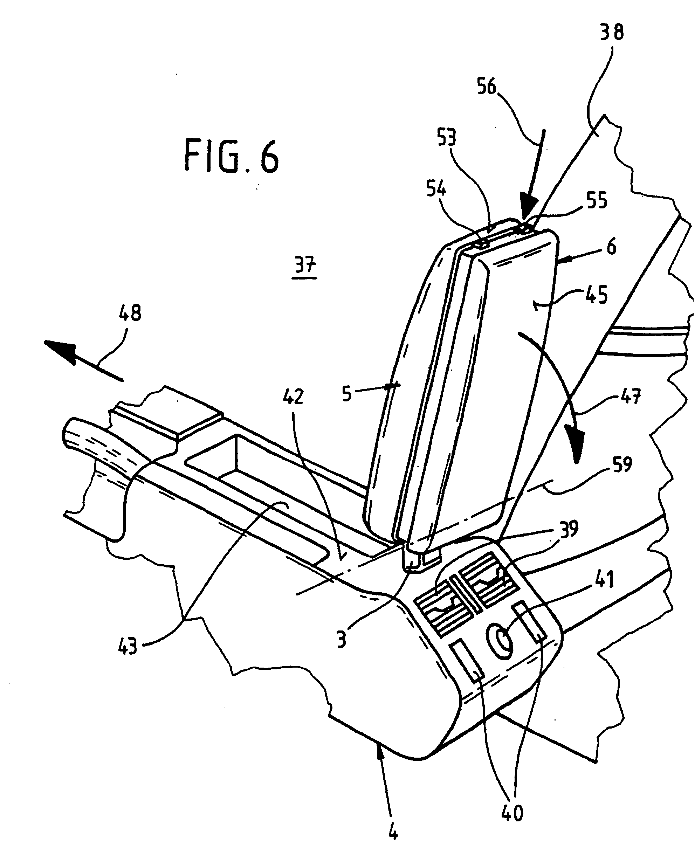

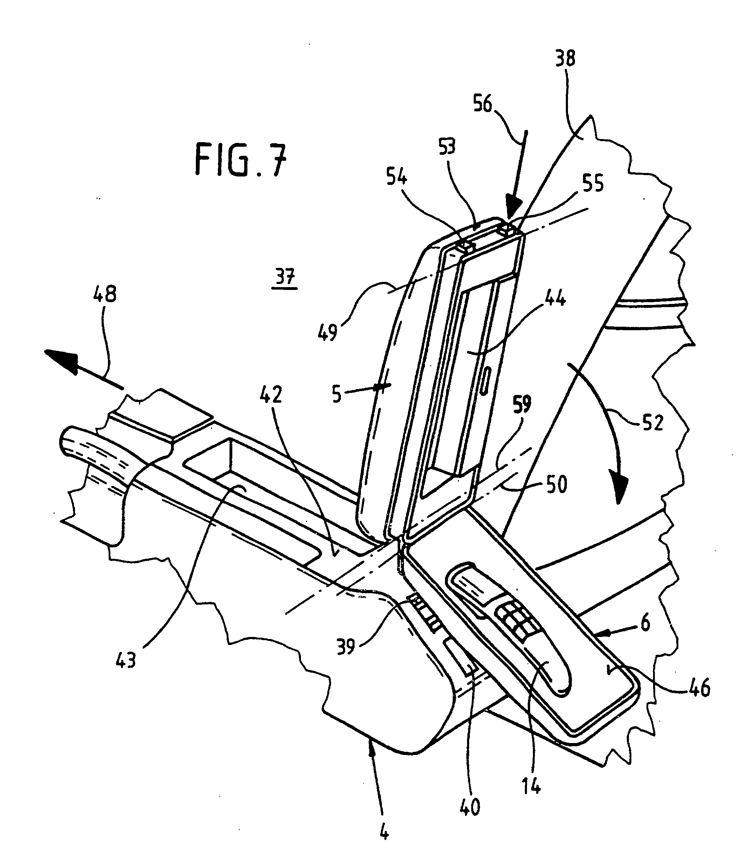

In Fig. 4 bezeichnet 37 einen Fahrgastraum, 38 die Rückenlehne eines Beifahrersitzes und 4 ein als Mittelkonsole ausgeführtes Verkleidungsteil, das hier zwischen den beiden Vordersitzen eines Kraftfahrzeugs, zum Beispiel eines PKW, angeordnet ist. An dem Verkleidungsteil 4 sind Heizungs- und Lüftungsschlitze 39 und Bedienelemente 40, 41 - jeweils zugänglich für die Fondpassagiere des Fahrzeugs- schematisch angedeutet. Auf einer Oberseite 42 des Verkleidungsteils 4 und gelenkig sowie verrastbar mit dieser über den Lagerfuß 3 verbunden ist der Grundkörper 5 angeordnet, der hier eine in das Verkleidungsteil 4 eingearbeitete und zur Ablage mitgeführter Gegenstände verwendbare Vertiefung 43 (siehe insbesondere Fig. 6 und 7) abdeckt.

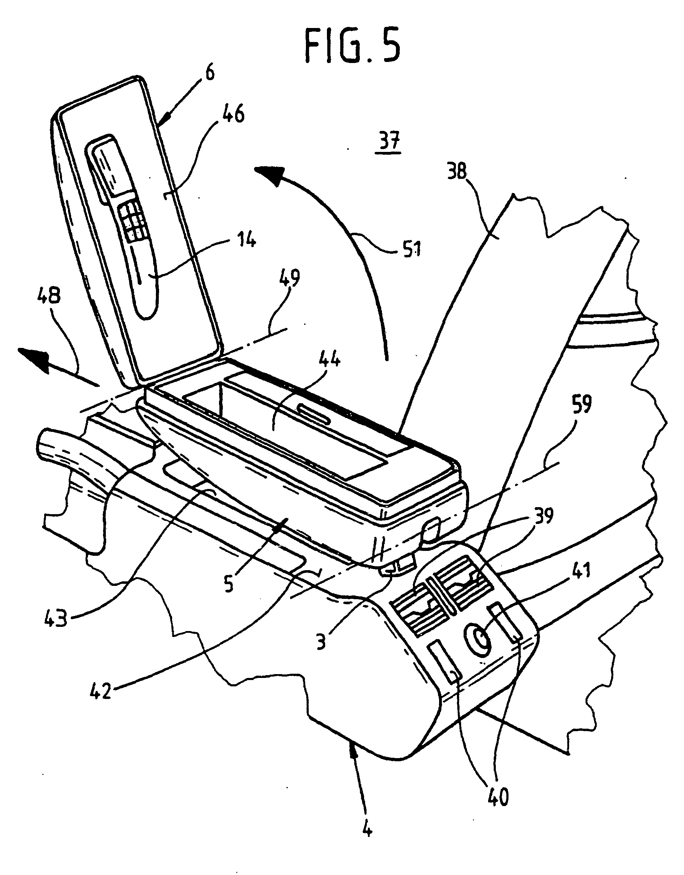

Wie aus den Fig. 5 und 7 hervorgeht, weist auch der Grundkörper 5 eine Vertiefung auf, die hier mit 44 beziffert und von dem als Behältnis ausgeführten Deckel 6 abdeckbar ist (siehe Fig. 4 und 6). Die Oberseite des Deckels 6, in Fig. 4 und 6 mit 45 bezeichnet, dient in (gegebenenfalls verrasteter) Schließstellung des Grundkörpers 5 und des Deckels 6 als unmittelbare Armauflage für die auf den Vordersitzen befindlichen Fahrzeugbenutzer.

Wie die Fig. 5 und 7 erkennen lassen ,ist der Deckel an seiner Innenseite 46 zur Aufnahme des Handys 14 hergerichtet, Das Handy 14 ist in einer entsprechend seiner Konturen geformten Vertiefung des Deckels 6 angeordnet und kann bei dessen aufgeklappter Stellung (Fig. 5 und 7) von den Fahrzeuginsassen zwecks Benutzung entnommen werden.

Eine wesentliche Besonderheit des aus der Zeichnung ersichtlichen und im Vorstehenden beschriebenen Gegenstandes besteht darin, dass der Grundkörper 5 an seinem rückwärtigen Ende 12 so gelagert ist, dass er um eine Querachse 59 in Pfeilrichtung 47, also entgegen der Fahrtrichtung (Pfeil 48), in eine hochgeklappte Stellung (Fig. 6 und 7) verschwenkt werden kann. Falls erforderlich, kann eine Rastvorrichtung (siehe beispielsweise Arretiervorrichtung 33 in Fig. 3) vorgesehen sein, die - um das Verschwenken des Grundkörpers 5 aus seiner Ruhestellung (Fig. 4 und 5) zu ermöglichen - zuvor gelöst werden muss (z.B. manuell durch Betätigung der Taste 34 oder dergleichen). Auch zur Sicherung des Grundkörpers 5 in seiner hochgeklappten Position (siehe Fig. 6 und 7) kann eine entsprechend Rastvorrichtung vorgesehen sein.

Eine weitere wesentliche Besonderheit liegt darin, dass der Deckel 6 an dem Grundkörper 5 so gelagert ist, dass er gegenüber diesem nicht nur um eine erste (vordere) Querachse 49 (siehe Fig. 5), sondern darüber hinaus auch noch um eine zweite (hintere) Querachse 50 (siehe Fig. 7) verschwenkt werden kann. Um ein wahlwieses Aufklappen des Deckels 6 nach vom (Fig. 5, Pfeilrichtung 51) oder Herunterklappen nach hinten (Fig. 7, Pfeilrichtung 52) zu ermöglichen, bedarf es einer Freigabe der jeweils anderen Lagerung (Schwenkachse 50 beziehungsweise Schwenkachse 49). Hierfür sind bei diesem Ausführungsbeispiel an der mit 53 bezifferten vorderen Stirnseite des Grundkörpers 5 zwei manuell bedienbare Tasten 54, 55 vorgesehen (siehe Fig. 6 und 7). So kann durch Betätigung beispielsweise der Taste 54 die Lagerung des Deckels 6 im Bereich der zweiten (hinteren) Schwenkachse 50 freigegeben werden, woraufhin der Deckel 6 um die "aktivierte" erste (vordere) Schwenkachse 49 in die aus Fig. 5 ersichtliche Stellung aufklappbar ist. Umgekehrt lässt sich durch Betätigung beispielsweise der Taste 55 (siehe Pfeil 56 in Fig. 6 und 7) die der zweiten (hinteren) Schwenkachse 50 zugeordnete Lagerung "aktivieren" und gleichzeitig die der ersten (vorderen) Schwenkachse 49 zugeordnete Lagerung freigeben. In diesem Fall kann der Deckel 6 in die aus Fig. 7 ersichtliche Position heruntergeklappt werden.

Was die die Schwenkachsen 49 und 50 bildenden Lagerungen des Deckels 6 und deren Freigabe beziehungsweise "Aktivierung" anbelangt, so sollen hier dem Fachmann keinerlei einengende Grenzen gesetzt sein. Denkbar wäre etwa eine Lagerung auf der Basis von Scharnieren, die zum Beispiel auf elektromagnetischem Weg freigegeben bzw. aktiviert werden können.

Fig. 5 zeigt den Deckel 6 in um die erste (vordere) Schwenkachse 49 nach vorn (Pfeilrichtung 51) aufgeklappter Position. In dieser Stellung kann das Handy 14 von den auf den Vordersitzen befindlichen Fahrzeuginsassen bequem zur Benutzung entnommen werden.

Fig. 6 zeigt den Grundkörper 5 in um die Querachse 59 nach rückwärts hochgeklappter und - gegebenenfalls - verrasteter Stellung. Durch Betätigung zum Beispiel der Taste 55 kann nun das die erste Schwenkachse 49 bildende Lager des Deckels 6 freigegeben und gleichzeitig das die zweite Schwenkachse 50 bildende Lager "aktiviert" werden. Anschließend lässt sich der Deckel 6 in Pfeilrichtung 47, 52 in die aus Fig. 7 ersichtliche Position herunterklappen. Das Handy 14 steht nun den auf den Rücksitzen befindlichen Fahrgästen bequem erreichbar zur Verfügung. Ein Vergleich der Fig. 5 und 7 zeigt, dass sowohl für die Insassen auf den Vordersitzen als auch für Fondinsassen das Handy 14 mit Display und Tastatur immer in der richtigen Position liegt.

## Patentansprüche

1. In einem Fahrzeug nutzbare Staubox (1) mit einem wannenartigen Grundkörper (5) an dem wenigstens ein Deckel (6) schwenkbar angelenkt ist, wobei für die Verschwenkung des Deckels (6) einem ersten Endbereich (11) des wannenartigen Grundkörpers (5) eine Schwenklagerung (7, 49) und einem zweiten Endbereich (12) eine im Wesentlichen senkrecht zur Längsachse (13) des Grundkörpers (5) ausgerichtete Zusatzschwenklagerung (9, 50) zugeordnet ist, und wobei eine durch die Schwenklagerung (7, 49) gebildete erste und eine durch die Zusatzschwenklagerung (9, 50) gebildete zweite Verbindung zwischen dem Grundkörper (5) und dem Deckel (6) jeweils mittels einer Verstelleinrichtung (21, 54 bzw. 28, 55) aufhebbar ist, **dadurch gekennzeichnet, dass** die Staubox mittels einer Basislagerung an einer Lagerkonsole (2) angelenkt ist, und dass die erste (21, 54) und/oder zweite Verstelleinrichtung (28, 55) durch Bewegungen der Staubox in der Basislagerung beeinflussbar ist, derart, dass nach Verschwenkung der Staubox in eine erste Gebrauchslage, in der die Längsachse (13) des Grundkörpers (5) im Wesentlichen horizontal verläuft, die erste Verbindung aktiviert und die zweite Verbindung gelöst ist, und dass nach Verschwenkung in wenigstens eine zweite Gebrauchslage, in der die Längsachse (13) des Grundkörpers (5) im Bereich der Vertikalen verläuft, die erste Verbindung gelöst und die zweite Verbindung aktiviert ist.

2. Staubox nach Anspruch 1, **dadurch gekennzeichnet, dass** bei einer Verschwenkung der Staubox aus der ersten Gebrauchslage heraus in die zweite Gebrauchslage hinein die erste Verstelleinrichtung (21, 54) in Richtung Lösen der ersten Verbindung betätigt ist, und die zweite Verstelleinrichtung (28, 55) in Richtung Aktivierung der zweiten Gebrauchslage betätigt ist.

3. Staubox nach Anspruch 1, **gekennzeichnet durch** eine derartige Steuerung der Betätigung des Deckels (6), dass das die vordere (erste) Schwenkachse (7, 49) bildende Lager nur bei hochgeklappter Stellung des Grundkörpers (5) freigegeben werden kann.

4. Staubox nach Anspruch 1, 2 oder 3, **dadurch gekennzeichnet, dass** der Deckel (6) durch Scharniere am Grundkörper (5) gelagert ist, die jeweils nur wechselseitig aktiviert oder freigegeben werden können.

## Claims

1. Storage compartment (1) that can be used in a vehicle, with a tank-like basic element (5) to which at least one cover (6) is hinged, wherein a swivel bearing application (7, 49) is assigned to a first end region (11) of the tank-like basic element (5), and an additional swivel bearing application (9, 50) aligned essentially perpendicularly to the longitudinal axis (13) of the basic element (5) for the purpose of swivelling the cover (6), and wherein a first connection between the basic element (5) and the cover (6), formed by the swivel bearing application (7, 50), and a second such connection, formed by the additional swivel bearing application (7, 49), may be Iraised by means of an adjusting device (21, 54 and 28, 55 respectively, **characterised in that** the storage compartment is articulated by means of a basic bearing application to a bearing bracket (2), and **in that** the first (21, 54) and/or second adjusting device (28, 55) can be influenced by movements of the storage compartment in the basic bearing application, so that after the storage compartment is swivelled into a first useful position, in which the longitudinal axis (13) of the basic element (5) runs essentially horizontally, activates the first connection and the second connection is detached, and so that after it is swivelled into at least a second useful position, in which the longitudinal axis (13) of the basic element (5) runs in the region of the verticals, the first connection is released and the second connection is activated.

2. Storage compartment according to Claim 1, **characterised in that** when the storage compartment is swivelled from the first useful position into the second useful position, the first adjusting device (21, 54) is caused to release the first connection, and the second device (28, 55) is caused to activate the second useful position.

3. Storage compartment according to Claim 1, **characterised by** such a control of the actuation of the cover (6) that the bearing forming the front (first) axis of swivelling (7, 49) can only be released when the basic element (5) is in the folded up position.

4. Storage compartment according to Claim 1, 2 or 3, **characterised in that** the cover (6) is mounted on the basic element (5) by hinges which can only be activated or released reciprocally.

## Revendications

1. Réceptacle de rangement (1) utilisable dans un véhicule, avec un corps de base (5) du genre d'une auge, sur lequel est articulé un pivotement au moins un couvercle (6), où, pour le pivotement du couvercle (6), à une première zone d'extrémité (11) du corps de base (5) du genre d'une auge, est associé un palier de pivotement (7, 49) et, à une deuxième zone d'extrémité (12), est associé un palier de pivotement additionnel (9, 50), orienté sensiblement perpendiculairement à l'axe longitudinal (13) du corps de base (6), et où une première liaison, formée par le palier de pivotement (7, 49), et une deuxième liaison, formée par le palier de pivotement additionnel (9, 50), entre le corps de base (5) et le couvercle (6), est respectivement susceptible d'être supprimée en utilisant un dispositif de manoeuvre (21, 54) respectivement (28, 55), **caractérisé en ce que** le réceptacle de rangement est articulé à une console formant palier (2), au moyen d'un palier de base, et **en ce que** le premier (21, 54) et/ou le deuxième dispositif de manoeuvre (28, 55) peuvent être influencés par des déplacements du réceptacle de rangement dans le palier de base, de manière que, après avoir effectué un pivotement du réceptacle de rangement en une première position d'utilisation, à laquelle l'axe longitudinal (13) du corps de base (5) s'étend sensiblement horizontalement, la première liaison soit activée et la deuxième liaison soit coupée, et **en ce que**, après un pivotement en au moins une deuxième position d'utilisation, à laquelle l'axe longitudinal (13) du corps de base (5) s'étend dans la zone de la verticale, la première liaison est coupée et la deuxième liaison est activée.

2. Réceptacle de rangement selon la revendication 1, **caractérisé en ce que**, en cas d'un pivotement du réceptacle de rangement, de la première position d'utilisation à la deuxième position d'utilisation, le premier dispositif de manoeuvre (21, 54) est actionné dans le sens de la coupure de la première liaison, et le deuxième dispositif de manoeuvre (28, 55) est actionné dans le sens de l'activation de la deuxième position d'utilisation.

3. Réceptacle de rangement selon la revendication 1, **caractérisé par** une commande de l'actionnement du couvercle (6), telle que le palier formant le (premier) axe de pivotement (7, 49) avant ne puisse être libéré lorsque le corps de base (5) est à la position relevée par rabattement.

4. Réceptacle de rangement selon la revendication 1, 2 ou 3, **caractérisé en ce que** le couvercle (6) est monté sur le corps de base (5) par des charnières, qui ne peuvent être activées ou libérées chaque fois que de façon alternée.
